# EUROPÄISCHE PATENTSCHRIFT

(11) **EP 4 373 685 B1**
(45) Veröffentlichungstag und Bekanntmachung des Hinweises auf die Patenterteilung: **19.02.2025**
(21) Anmeldenummer: 22737639.9
(22) Anmeldetag: 30.06.2022
(51) Int. Cl.: B60K 1/04, B60K 17/28, B62D 49/00, B62D 49/06, B60K 1/00

(54) **TRAKTOR**
TRACTOR
TRACTEUR

(30) Priorität: 23.07.2021 DE 102021119193
(43) Veröffentlichungstag der Anmeldung: 29.05.2024
(73) Patentinhaber: Sima Investment AG, 6048 Horw (CH)
(72) Erfinder: SIEBER, Marco, 6048 Horw (CH)
(74) Vertreter: Patentanwaltskanzlei Vièl & Wieske PartGmbB
(86) Internationale Anmeldenummer: PCT/EP2022/068084
(87) Internationale Veröffentlichungsnummer: WO 2023/001519

(56) Entgegenhaltungen:
- US-A- 3 874 469
- RATHMASCHINEN: "RATH MASTERTRAC- Toolcarrier Geräteträger", 8 October 2011 (2011-10-08), XP055963906, Retrieved from the Internet <URL:https://www.youtube.com/watch?v=sJQqk5f5900> [retrieved on 20220922]
- SIMISFARM PRODUCTIONS: "Fobro Mobil D46", 9 December 2016 (2016-12-09), XP055963910, Retrieved from the Internet <URL:https://www.youtube.com/watch?v=CAs0t1U6WFQ&list=RDLVsJQqk5f5900&index=7> [retrieved on 20220922]
- HET GROENE OOSTEN: "HGO GLD S2 afl. 8 - Elektrische tractor", 28 February 2017 (2017-02-28), XP055964136, Retrieved from the Internet <URL:https://www.youtube.com/watch?v=Xq_yGzM7bVI> [retrieved on 20220923]
- FARM MACHINERY JOURNAL: "John Deere's electric tractor in action", 13 March 2017 (2017-03-13), XP055964139, Retrieved from the Internet <URL:https://www.youtube.com/watch?v=TJOyITolHUk> [retrieved on 20220923]

## Beschreibung

Die Erfindung betrifft einen Traktor für die Landwirtschaft mit einem Rahmen, der über ein Verbindungselement einen vorderen Traktorteil und einen hinteren Traktorteil miteinander verbindet, einem Fahrersitz im Bereich des hinteren Traktorteils, einem Antrieb und mindestens vier Rädern, wobei das Verbindungselement des Rahmens, das den hinteren Traktorteil und den vorderen Traktorteil miteinander verbindet, mindestens 60 cm über dem Fahrersitz angeordnet ist und sich im Wesentlichen horizontal bis zum vorderen Traktorteil erstreckt.

Traktoren für die Landwirtschaft werden in der heutigen Zeit vorwiegend mit Dieselmotoren betrieben. Im Ackerbau werden vorwiegend schwere Traktoren mit einem Gewicht von über 5 Tonnen betrieben. Sie haben die Aufgabe große und schwere Landmaschinen zu ziehen. Für den Anbau von niedrigen Pflanzen, die in Reihen angeordnet sind, wie im Gemüsebau oder in Baumschulen, werden kleinere Traktoren eingesetzt, die nur ein Gewicht zwischen 1,5 und 3 Tonnen haben. Da diese Pflanzen in Reihen mit Zwischenräumen angepflanzt werden, verringert das geringere Gewicht des Traktors die unerwünschte Bodenverdichtung zwischen den kleinwüchsigen Pflanzenreihen.

Um zwischen den Pflanzenreihen eine Unkraut- oder Grasbildung zu vermeiden, kann einerseits mit sprühen von Pestiziden begegnet werden, andererseits kann mit Hackgeräten oder Hackbürsten (siehe https://www.baertschi.com/de/fobro-schar- und-sternhackgerate/) zwischen den Reihen mechanisch das Unkraut ausgerissen oder deren Wurzeln so beschädigt werden, dass sie nicht mehr wachsen können und somit zur eigentlichen Kulturpflanze keine Konkurrenz in der Nahrungsaufnahme aus dem Boden bilden können. Diese mechanische Bodenbearbeitung wird vorwiegend beim biologischen Anbau von Gemüsen eingesetzt.

Ein spezielles Fahrzeug, das diese Aufgabe erfüllt ist das Fobro-Mobil (https://fobro-mobil.ch/de/fobromobil-d49/). Dieses Fahrzeug wird mit einem Diesel- oder Benzinmotor betrieben. Das Fobro-Mobil verfügt über 3 Aufnahmen von Arbeitsgeräten, wie zum Beispiel Hackgeräte oder Hackbürsten. Diese Geräte können hinten am Traktor, vorne am Traktor und in der Mitte des Traktors, unmittelbar vor dem Fahrersitz angebracht werden. Zu diesem Zweck wurden die Vorderachse und die Hinterachse über den Kopf des Fahrers mit 2 Rohren verbunden. Das erlaubt, das der Fahrer direkt vor sich das in der mittleren Aufnahme befestigte Hackgerät sieht und es präzise zwischen den Pflanzenreihen ohne Beschädigung der Kulturpflanze steuern kann. Normale Traktoren verfügen nicht über eine mittlere Aufnahme von Geräten, sondern müssen diese hinten an den Traktor anhängen. Dann muss meist ein zusätzlicher Mitarbeiter auf dem Hackgerät sitzen und es zwischen den Reihen so steuern, dass die Pflanzen nicht beschädigt werden. Das ist aufwändig und teuer.

Der Fahrer des Fobro-Mobils sitzt neben dem Diesel- oder Benzin-Motor seitlich versetzt zur Mitte. Das hat den Vorteil, dass das Gewicht auf der Hinterachse gleichmäßig auf beide Räder verteilt wird und somit einen guten Vortrieb und gleichmäßigen Druck auf die Erde gewährleistet. In Fahrtrichtung des Forbo-Mobil ist zum Beispiel das Gewicht des Fahrers näher zum hinteren linken Rad und das Gewicht des Motors näher zum hinteren rechten Rad. Die Verbindung der Vorder- und Hinterräder werden beim Fobro-Mobil über zwei Rohre oder Profile gemacht, was den Nachteil hat, dass bei einer Straßenfahrt der Fahrer eine Verbindungsrohr direkt vor sich sieht, was ihm die Sicht geradeaus behindert. Das zweite Rohr oder Profil in Fahrrichtung rechts daneben, behindert die Sicht nach rechts zum Straßenrand, was gefährlich für Fußgänger sein kann und die Distanz zum Straßenrand sich schwierig einschätzen lässt.

Ein weiteres Fahrzeug der diese Aufgabe erfüllen kann, ist der Mastertrac (http://www.rath-maschinen.com/de/mastertrac.html). Auch dieses Fahrzeug wird mit einem Dieselmotor betrieben und verfügt über drei Aufnahmen von Arbeitsgeräten. Hinten, vorne und in der Mitte des Fahrzeuges, direkt vor dem Fahrer. Auch bei diesem Fahrzeug ist das hintere Räderpaar mit dem vorderen Räderpaar verbunden, dies aber mit einem gebogenen Profil neben dem Fahrer oder genauer zwischen dem seitlich angebrachten Motor und dem Fahrersitz. Der Kopf des Fahrers ist in etwa auf gleicher Höhe mit der genannten Radverbindung. Die Sicht des Fahrers auf das im Mittelteil angebrachten Hackgerät, ist durch die mittig und auf Kopfhöhe angebrachten Radverbindung behindert. Auch die Sicht im Straßenverkehr ist durch die Positionierung dieser Achsenverbindung seitlich zum Straßenrand behindert. Ein weiterer Nachteil dieses Traktors ist der fehlende Abstand von der Unterkante der Achsenverbindung zum Boden. Damit können große Geräte nicht genug angehoben werden, was beim Transport in unebenem Gelände ein Nachteil ist.

Solche Spezialtraktoren für die Bodenbearbeitung von Pflanzenreihen werden ohne Kabinen ausgeliefert, da diese sonst die freie Sicht auf die Hackwerkzeuge behindern und zusätzlich Gewicht bringen. Bei diesen Spezialtraktoren für die Bearbeitung von niederwüchsigen Pflanzenreihen, gilt es jegliches überflüssige Gewicht zu eliminieren, um den Bodendruck nicht zu erhöhen.

Diese Spezialtraktoren mit drei Aufnahmen für Bodenbearbeitungsgeräte, werden alle mit Diesel- oder Benzinmotoren betrieben. Mit den immer strenger werdenden Umweltschutzauflagen und der Verminderung der CO₂-Emissionen, wird es immer teurer geeignete Motoren zu finden, die über geeignete Abgasnachbehandlungsanlagen verfügen, um den CO₂- und Feinpartikel-Ausstoß auf die gesetzlichen Anforderungen zu reduzieren.

Ein weiteres Problem ist der gesundheitliche Schutz des Fahrers. Der Fahrer sitzt in der Regel mehrere Stunden auf dem Spezialtraktor und verrichtet seine Bodenbearbeitung. Er sitzt dazu unmittelbar neben dem Diesel- oder Benzinmotor. Da diese Fahrzeuge funktionsbedingt über keine Kabine verfügen, ist der Fahrer den schädlichen Abgasemissionen schutzlos und in hohem Masse ausgesetzt. Durch die Nähe zum Motor ist der Fahrer auch ungeschützt dem lauten Motorengeräusch ausgesetzt. So ist er meist gezwungen, einen Ohrenschutz zu tragen.

Aus der DE 10 55 377 A ist ein Traktor für die Landwirtschaft mit einem Rahmen, der über ein Verbindungselement einen vorderen Traktorteil und einen hinteren Traktorteil miteinander verbindet, einen Fahrersitz im Bereich des hinteren Traktorteils, einen Antrieb und mindestens vier Räder aufweist, wobei sich das Verbindungselement horizontal bis zum vorderen Traktorteil erstreckt.

Die Aufgabe der Erfindung besteht darin, einen Traktor für die Landwirtschaft zu schaffen, der die obengenannten Nachteile vermeidet.

Diese Aufgabe wird erfindungsgemäß durch einen Traktor für die Landwirtschaft mit den Merkmalen des Anspruchs 1 gelöst.

Beim erfindungsgemäßen Spezialtraktor wird der vordere Traktorteil und der hintere Traktorteil mit einem einzigen Verbindungselement, bestehend vorzugsweise aus einem Profil oder Rohr oder mehreren nahe beieinanderliegenden Profilen oder Rohren, verbunden. Dieses Verbindungselement, das den vorderen Traktorteil und den hinteren Traktorteil miteinander verbindet, wird so angebracht, dass der Fahrer unter dem Verbindungsteil in Fahrtrichtung nach rechts einen freien Blick hat. Zu diesem Zweck muss der Abstand von der Höhe der Sitzfläche des Fahrersitzes, gemessen ab der Vorderkante der Sitzfläche senkrecht nach oben, zur Höhe der Unterkante des Verbindungselementes, mindestens 60 cm betragen. Das Verbindungsteil erstreckt sich im Wesentlichen horizontal bis zum vorderen Traktorteil (was bedeutet, dass es auch leicht zum vorderen Traktorteil hin abfallen kann) und geht dort in ein vertikales Element über, an dem die Vorderräder aufgehängt sind. Das Verbindungsteil ist somit oberhalb des Blickfeldes des Fahrers angeordnet. Der Fahrer kann somit unter dem Verbindungselement nach rechts schauen und auch auf ein hinter dem vorderen Traktorteil angeordnete Arbeitsgerät. Dies ermöglicht ein präzises Manövrieren bei der Bodenbearbeitung von Pflanzreihen.

Das Verbindungselement ist mittig der Längsachse des Spezialtraktors angebracht, so dass der Fahrer nach vorne und auch seitlich eine freie Sicht auf ein in der Mitte des Traktors angebrachtes Arbeitsgerät hat und bei der Straßenfahrt geradeaus sowie seitlich zum Straßenrand über eine ungehinderte Sicht verfügt.

Eine Weiterbildung der Erfindung besteht darin, dass das Verbindungselement des Rahmens, das den hinteren und den vorderen Traktorteil miteinander verbindet, mindestens 70 cm, bevorzugt mindestens 80 cm, über dem Fahrersitz angeordnet ist.

Somit ist das Verbindungselement bevorzugt mittig der Längsachse des Spezialtraktors angebracht, so dass der Fahrer nach vorne und auch seitlich eine freie Sicht auf ein in der Mitte des Traktors angebrachtes Arbeitsgerät hat und bei der Straßenfahrt geradeaus sowie seitlich zum Straßenrand über eine ungehinderte Sicht verfügt.

Hierdurch wird verhindert, dass der Sichtbereich nach vorne des Fahrers durch das Verbindungselement eingeschränkt wird.

Eine vorteilhafte Ausgestaltung der Erfindung besteht darin, dass die Räder einzeln aufgehängt und einzeln angetrieben sind.

Alternativ ist es auch möglich, dass Paare von hinteren Rädern oder von vorderen Rädern über jeweils eine Achse verbunden sind und gemeinsam über die verbindende Achse angetrieben sind.

Es können zwei Räder oder alle vier Räder angetrieben sein.

Eine bevorzugte Ausgestaltung der Erfindung besteht darin, dass als Antrieb mindestens ein Elektromotor vorgesehen ist.

In diesem Zusammenhang wird bevorzugt, dass der Elektromotor auf die Hinterräder wirkt.

Es ist aber auch möglich, einen Allradantrieb vorzusehen.

Nachfolgend wird ein bevorzugtes Ausführungsbeispiel anhand von Zeichnungen näher erläutert.

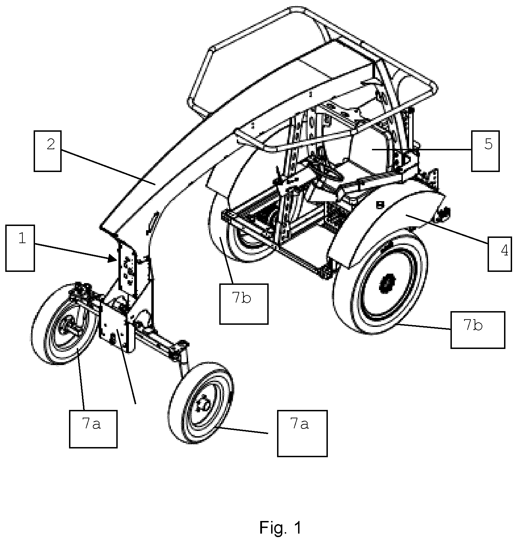

Es zeigen
- Fig. 1: eine perspektivische Ansicht eines erfindungsgemäßen Traktors,

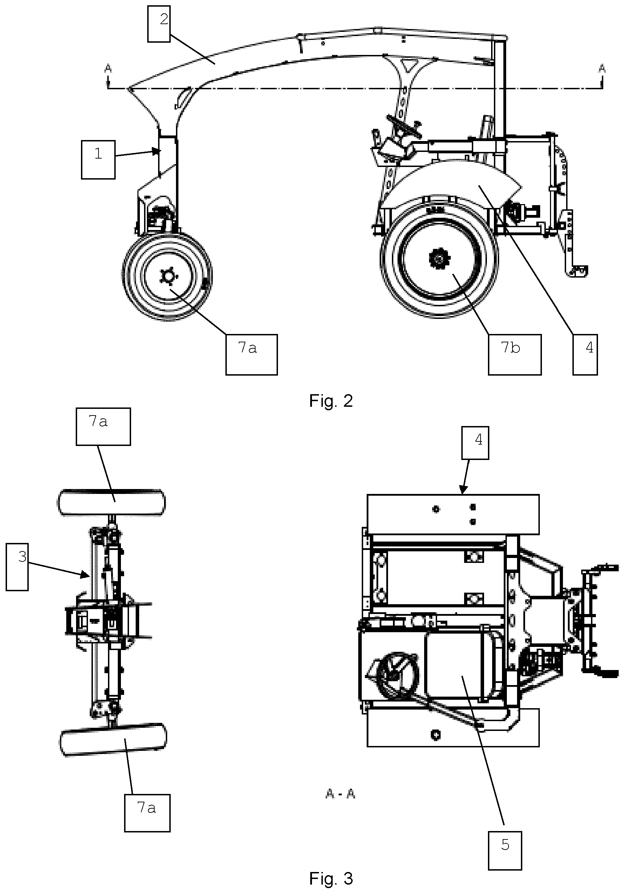

- Fig. 2: eine Seitenansicht des erfindungsgemäßen Traktors,
- Fig. 3: den Schnitt A-A zu Fig. 2,
- Fig. 4: eine Vorderansicht des erfindungsgemäßen Traktors,
- Fig. 5: den Schnitt B-B zu Fig. 4,

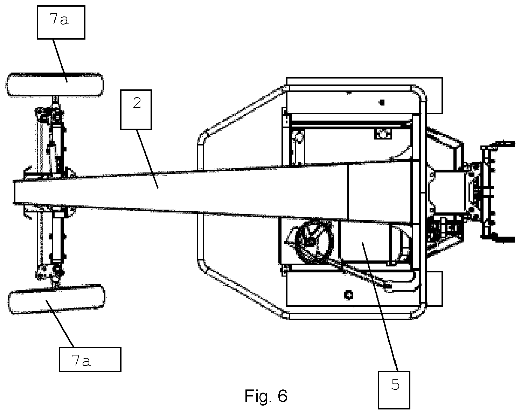

- Fig. 6: eine Draufsicht auf den erfindungsgemäßen Traktor.

Der erfindungsgemäße Traktor für die Landwirtschaft weist einen Rahmen 1 auf, der über ein Verbindungselement 2 einen vorderen Traktorteil 3 und einen hinteren Traktorteil 4 miteinander verbindet. Im hinteren Traktorteil 4 sind ein Fahrersitz 5 und ein Antrieb 6 vorgesehen. Der Traktor weist mindestens vier Räder 7a, 7b auf, vorzugsweise ein Paar von vorderen Rädern 7a und ein Paar von hinteren Rädern 7b, die miteinander fluchten. Die Räder 7a, 7b können einzeln aufgehängt sein oder paarweise über eine Achse verbunden sein.

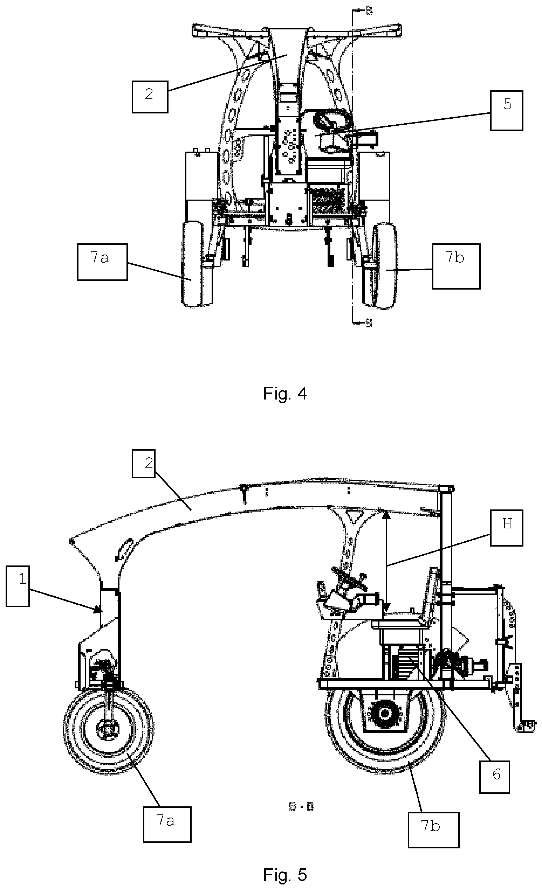

Das Verbindungselement 2 des Rahmens 1, das den hinteren Traktorteil 4 und den vorderen Traktorteil 3 miteinander verbindet, ist mindestens 60 cm, bevorzugt mindestens 70 cm und besonders bevorzugt mindestens 80 cm über dem Fahrersitz 5 angeordnet (Höhe H in Fig. 4) und erstreckt sich im Wesentlichen horizontal bis zum vorderen Traktorteil 3. Im vorliegenden Beispiel ist das im Wesentlichen horizontale Verbindungselement nach vorne hin leicht abfallend ausgebildet. Die Unterseite des Verbindungselementes 2 auf Höhe der vorderen Räder 7a kann um bis zu 20 % weniger hoch als am höchsten Punkt der Unterseite des Verbindungselementes 2 angeordnet sein. Das Verbindungselement 2 ist mittig zwischen den hinteren Rädern 7b und vorzugweise auch mittig zwischen den vorderen Rädern 7a angeordnet.

Der Fahrersitz 5 ist im gezeigten Ausführungsbeispiel links des Verbindungselementes 2 angeordnet, um den Blick nach vorne des Fahrers nicht zu behindern.

Durch diese Art der Anordnung des Verbindungselementes 2 kann der Fahrer sowohl bei der Feldarbeit das hinter dem vorderen Traktorteil 3 angeordneten Arbeitsgerät im Auge behalten als auch bei der Straßenfahrt eine freie Sicht haben.

Es können entweder nur die hinteren Räder 7b angetrieben sein oder ein Allradantrieb vorliegen.

Anstelle eines Diesel- oder Benzinmotors werden für die Energieversorgung des Antriebes, der Hydraulik und der angehängten Geräte vorzugsweise ein oder mehrere Elektromotoren verwendet. Damit werden schädliche Abgasemissionen für die Umwelt oder den Fahrer vermieden und Lärmimmissionen für den Fahrer vermieden. Dazu kann ein solcher erfindungsgemäßer Traktor mit Elektroantrieb in Gewächshäusern eingesetzt werden. Ein weiterer Vorteil der Verwendung eines Elektromotors ist die Nutzung von Solar-, Wind-, oder Biogasenergie, die vor Ort durch den Benutzer selbst produziert werden kann. Damit können die Betriebskosten des Elektrotraktors erheblich gesenkt werden.

Der oder die Elektromotoren können das Fahrzeug direkt antreiben, in dem sie direkt auf die Achsen oder Räder 7a, 7b wirken, oder es wird mit dem Elektromotor die Energie an einen Hydraulikkreislauf geliefert, der das Fahrzeug indirekt über die Hydraulik antreibt. Auch die angehängten Geräte können direkt über den oder die Elektromotoren angetrieben werden, oder indirekt über Hydraulikmotoren und Hydraulikpumpen mit Energie versorgt werden. Dazu verfügt der erfindungsgemäße Traktor über einen oder mehrere Hydraulikmotoren, über einen oder mehrere Hydraulikpumpen und über einen oder mehrere Hydraulikölkreise.

Der oder die verwendeten Elektromotoren verfügen über eine Gesamtleistung von mindestens 25 kW, bevorzugt von mindestens 30 kW und am bevorzugtesten von mindestens 35 kW. Dazu verfügt jeder der verwendeten Elektromotoren über eine Spannung von mindestens 100 Volt, bevorzugt mindestens 360 Volt. Sie sind luft- oder bevorzugt wassergekühlt.

Der erfindungsgemäße Elektrotraktor verfügt über eine oder mehrere Batterien, zusammen mit einer Gesamtleistung von bevorzugt mindestens 25 kW, bevorzugt von mindestens 30 kW und am bevorzugtesten von mindestens 35 kW. Eine oder mehrere Batterien können entweder fest verbaut werden, oder als Austauschbatterien vorgesehen sein, so dass der Benutzer des erfindungsgemäßen Traktors die Betriebszeit durch den Austausch von vorgeladenen Batterien verlängern kann. Geeignet sind handelsübliche Batterien, die für den Betrieb von Elektroautos verwendet werden. Insbesondere geeignet sind Lithium-Ionen-Batterien.

Die eine oder die mehreren Batterien können von einem Stromnetz oder einer anderen Stromquelle, wie zum Beispiel einer Photovoltaik-Anlage, einer Windenergie-Anlage, oder einer Biogas-Anlage direkt über ein Stromkabel geladen werden. Der erfindungsgemäße Traktor ist mit einem Kombi-OnBoard-Ladesystem elektrisch verbunden, welches bevorzugt bidirektional mit dem elektrischen AC-Netz verbunden werden kann, welches den Energiefluss nach Bedarf umkehren kann, sodass einerseits die Batterie vom Netz oder zum Beispiel von einer Photovoltaik-Anlage oder Windenergie-Anlage geladen werden kann und die gespeicherte Energie nach Bedarf wieder ins Netz oder an andere Verbraucher abgegeben werden kann. Die Batterie kann so bidirektional verwendet werden, also einerseits Strom aufnehmen und speichern, andererseits gespeicherten Strom abgeben, um damit externe elektrisch betriebene Geräte mit Drehstrom zu versorgen. Dazu verfügt der erfindungsgemäße Elektrotraktor über einen oder mehrere normierte handelsübliche Steckdosen, die zur Stromaufnahme oder als Stromausgänge verwendet werden können. So kann der Elektrotraktor als mobiler Stromversorger unabhängig von einem Stromnetz verwendet werden. Wird der Fahrbetrieb des erfindungsgemäße Elektrotraktors indirekt über Hydraulikmotoren, die auf eine oder mehrere Antriebsachsen oder mehrere Antriebsräder wirken, ausgeführt, so kann der oder die Hydraulikmotoren über einen Gang, oder bevorzugt zwei Gänge verfügen. Bei Zweigang-Hydraulikmotoren beträgt die Geschwindigkeit des ersten Ganges bei einer Zugkraft zwischen 7-12kN vorzugsweise maximal 13 km/h. Im zweiten Gang beträgt die Geschwindigkeit bei einer Leistung zwischen 4-7kN vorzugsweise maximal 40 km/h.

Das Verbindungselement 2 zwischen dem hinteren Traktorteil 4 und dem vorderen Traktorteil 3 kann aus einem oder mehreren eckigen Profilen oder Rohren ausgestaltet sein. Das Verbindungselement 2 besteht aus Stahl oder formstabilem Kunststoff, zum Beispiel Kevlar. Dieses Verbindungselement 2 darf die Sicht des Fahrers nicht wesentlich beeinträchtigen und hat im Bereich a) (dies ist der Bereich ab Höhe der Radnabe beginnend 2 m nach oben dem Verbindungselement 2 entlang) eine Breite von maximal 50 cm, bevorzugt maximal 40 cm, am bevorzugtesten maximal 30 cm. Das Verbindungselement 2 kann zum Beispiel als Hohlkörper, als U-Profil, als Doppel-U-Profil, als T-Profil, als Doppel-T-Profil oder Dreieckprofil ausgebildet sein. So können Leitungen, Kabel oder HydraulikSchläuche ohne erheblichen Sichtverlust für den Fahrer innerhalb des Verbindungselementes 2 geführt werden, oder am Verbindungselement 2 befestigt werden. Der Abstand von der Unterkante des Verbindungselements 2 zur Erdoberfläche beträgt mindestens 150 cm, inklusive der montierten Räder gemessen. Damit ist gewährleistet, dass die angehängten Arbeitsgeräte, beispielsweise Hackwerkzeuge, in der Mitte des Traktors hoch genug aus dem Boden angehoben werden können.

Der erfindungsgemäße Elektrotraktor ist mit einer Steuerung ausgestattet, welches alle hydraulischen und elektrischen Antriebskomponenten optimal steuert, in der Weise, dass die Effizienz des erfindungsgemäßen Elektrotraktors in jedem Betriebspunkt maximal ist. Die Steuerung und die Regelung der Elektromotoren und der hydraulischen Komponenten erfolgt gemäß der Erfindung so, dass in jedem Betriebspunkt des Traktors alle Komponenten mit maximalmöglicher Effizienz arbeiten. Die Kapazität der Batterien kann somit besser genutzt werden. Für die gewählte Betriebsdauer kann die Batterie kleiner gewählt werden, was zu tieferen Kosten führt.

Zusätzlich kann der Elektrotraktor mit einem Autopilot-System ausgerüstet werden. Das Autopilot-System verarbeitet die Informationen der Instrumente, Sensoren, Kameras und GPS des Elektrotraktors und hält automatisch den Elektrotraktor in der gewünschten Pflanzenspur.

Die Steuerung aller hydraulischen und elektrischen Antriebskomponenten kann mit dem Autopilot-System verbunden werden. Damit erhält die Steuerung vom Autopilot-System zusätzliche Informationen zum Beispiel über die Lage, Neigung, Beschleunigung und Geschwindigkeit und verbessert in einem internen Algorithmus die Effizienz des Elektrotraktors.

## Patentansprüche

1. Traktor für die Landwirtschaft mit einem Rahmen (1), der über ein Verbindungselement (2) einen vorderen Traktorteil (3) und einen hinteren Traktorteil (4) miteinander verbindet, einem Fahrersitz (5) im Bereich des hinteren Traktorteils (4), einem Antrieb (6) und mindestens vier Rädern (7a, 7b), wobei das Verbindungselement (2) des Rahmens (1), das den hinteren Traktorteil (4) und den vorderen Traktorteil (3) miteinander verbindet, mindestens 60 cm über dem Fahrersitz (5) angeordnet ist und sich im Wesentlichen horizontal bis zum vorderen Traktorteil (3) erstreckt, **dadurch gekennzeichnet, dass** der vordere Traktorteil (3) und der hintere Traktorteil (4) mit einem einzigen Verbindungselement (2) verbunden werden, das mittig zwischen hinteren Rädern (7b) und mittig zwischen vorderen Rädern (7a) angeordnet ist und der Fahrersitz rechts oder links des Verbindungselements angeordnet ist,so dass der Fahrer nach vorne und auch seitlich eine freie Sicht auf ein in der Mitte des Traktors angebrachtes Arbeitsgerät hat und bei der Straßenfahrt geradeaus sowie seitlich zum Straßenrand über eine ungehinderte Sicht verfügt.

2. Traktor gemäß Anspruch 1, **dadurch gekennzeichnet, dass** das Verbindungselement (2) des Rahmens (1), das den hinteren Traktorteil (4) und den vorderen Traktorteil (3) miteinander verbindet, mindestens 70 cm, bevorzugt mindestens 80 cm, über dem Fahrersitz angeordnet ist.

3. Traktor gemäß einem der vorhergehenden Ansprüche, **dadurch gekennzeichnet, dass** die Räder (7a, 7b) einzeln aufgehängt und einzeln angetrieben sind.

4. Traktor gemäß einem der Ansprüche 1 bis 2, **dadurch gekennzeichnet, dass** Paare von hinteren Rädern (7b) oder Paare von vorderen Rädern (7a) über jeweils eine Achse verbunden sind und gemeinsam über die verbindende Achse angetrieben sind.

5. Traktor gemäß einem der vorhergehenden Ansprüche, **dadurch gekennzeichnet, dass** als Antrieb (6) mindestens ein Elektromotor vorgesehen ist.

6. Traktor gemäß Anspruch 5, **dadurch gekennzeichnet, dass** der Elektromotor auf hintere Räder (7) wirkt.

7. Traktor gemäß einem der vorhergehenden Ansprüche, **dadurch gekennzeichnet, dass** ein Allradantrieb vorgesehen ist.

## Claims

1. Tractor for agricultural use having a chassis (1), which connects a front tractor part (3) and a rear tractor part (4) to one another via a connecting element (2), a driver's seat (5) in the region of the rear tractor part (4), a drive (6) and at least four wheels (7a, 7b), wherein the connecting element (2) of the chassis (1), which connects the rear tractor part (4) and the front tractor part (3) to one another, is arranged at least 60 cm above the driver's seat (5) and extends essentially horizontally to the front tractor part (3), **characterised in that** the front tractor part (3) and the rear tractor part (4) are connected with a single connecting element (2),which is arranged in the centre between the rear wheels (7b) and in the centre between the front wheels (7a) and the driver's seat (5) is arranged to the right or left of the connecting element (2), so that the driver has a clear view to the front and also to the side of an implement mounted in the centre of the tractor and has an unobstructed view when driving straight ahead and to the side of the road..

2. Tractor according to claim 1, **characterised in that** the connecting element (2) of the chassis (1), which connects the rear tractor part (4) and the front tractor part (3) to one another, is arranged at least 70 cm, preferably at least 80 cm, above the driver's seat.

3. Tractor according to any one of the preceding claims, **characterised in that** the wheels (7a, 7b) are individually suspended and individually driven.

4. Tractor according to any one of claims 1 to 3, **characterised in that** pairs of rear wheels (7b) or pairs of front wheels (7a) are each connected via an axle and are jointly driven via the connecting axle.

5. Tractor according to any one of the preceding claims, **characterised in that** at least one electric motor is provided as the drive (6).

6. Tractor according to claim 5, **characterised in that** the electric motor acts on the rear wheels (7).

7. Tractor according to any one of the preceding claims, **characterised in that** an all-wheel drive is provided.

## Revendications

1. Tracteur agricole muni d'un châssis (1) qui relie entre elles, par l'intermédiaire d'un élément de liaison (2), une partie avant de tracteur (3) et une partie arrière de tracteur (4), d'un siège de conducteur (5) dans la zone de la partie arrière de tracteur (4), d'un entraînement (6) et d'au moins quatre roues (7a, 7b), l'élément de liaison (2) du châssis (1), qui relie la partie arrière de tracteur (4) et la partie avant de tracteur (3), étant disposé à au moins 60 cm au-dessus du siège de conducteur (5) et s'étendant sensiblement horizontalement jusqu'à la partie avant de tracteur (3), **caractérisé en ce que** la partie avant de tracteur (3) et la partie arrière de tracteur (4) sont reliées par un seul élément de liaison (2) qui est disposé au milieu entre les roues arrière (7b) et au milieu entre les roues avant (7a), et le siège du conducteur est disposé à droite ou à gauche de l'élément de liaison, de sorte que le conducteur a une vue dégagée vers l'avant et également latéralement sur un outil de travail monté au centre du tracteur et dispose d'une vue sans obstacle vers l'avant ainsi que latéralement vers le bord de la route lors de la conduite sur route.

2. Tracteur selon la revendication 1, **caractérisé en ce que** l'élément de liaison (2) du châssis (1), qui relie la partie arrière de tracteur (4) et la partie avant de tracteur (3), est disposé à au moins 70 cm, de préférence à au moins 80 cm, au-dessus du siège de conducteur.

3. Tracteur selon l'une des revendications précédentes, **caractérisé en ce que** les roues (7a, 7b) sont suspendues individuellement et entraînées individuellement.

4. Tracteur selon l'une des revendications 1 à 2, **caractérisé en ce que** des paires de roues arrière (7b) ou des paires de roues avant (7a) sont reliées chacune par un essieu et sont entraînées ensemble par l'essieu qui les relie.

5. Tracteur selon l'une des revendications précédentes, **caractérisé en ce qu'il** est prévu au moins un moteur électrique comme entraînement (6).

6. Tracteur selon la revendication 5, **caractérisé en ce que** le moteur électrique agit sur les roues arrière (7).

7. Tracteur selon l'une des revendications précédentes, **caractérisé en ce qu'**il est prévu une traction intégrale.
